# EUROPÄISCHE PATENTSCHRIFT

(11) **EP 2 740 615 B1**
(45) Veröffentlichungstag und Bekanntmachung des Hinweises auf die Patenterteilung: **15.11.2017**
(21) Anmeldenummer: 13185076.0
(22) Anmeldetag: 19.09.2013
(51) Int. Cl.: B60C 15/06

(54) **Fahrzeugluftreifen**
Pneumatic tyre for a vehicle
Pneu de véhicule

(30) Priorität: 10.12.2012 DE 102012112031
(43) Veröffentlichungstag der Anmeldung: 11.06.2014
(73) Patentinhaber: Continental Reifen Deutschland GmbH, 30165 Hannover (DE)
(72) Erfinder: Voelsen, Peter, 30827 Garbsen (DE)
(74) Vertreter: Finger, Karsten

(56) Entgegenhaltungen:
- EP-A1- 0 780 248
- DE-A1- 19 534 808
- DE-A1-102004 008 308
- DE-A1-102006 020 308

## Beschreibung

Die Erfindung betrifft einen Fahrzeugluftreifen mit einer Radialkarkasse und zwei Wulstbereichen, welche je einen Wulstkern und einen dem Wulstkern aufsitzenden Wulstkernreiter aufweisen, wobei die Karkasse von axial innen nach axial außen um die Wulstkerne geführt ist und in einem Karkasshochschlag endet und wobei Wulstverstärker in den beiden Wulstbereichen des Fahrzeugluftreifens angeordnet sind, welche axial außen in Bezug auf den Wulstkernreiter plaziert sind und wobei der Wulstverstärker Monofilamente als Festigkeitsträger aufweist, und wobei der Wulstverstärker (6) Monofilamente als Festigkeitsträger aufweist, wobei die Monofilamente gerade und linienförmig ausgebildet sind.

Ein derartiger Fahrzeugluftreifen ist aus der DE 195 34 808 A1 bekannt.

Aus der JP 2011-131680 A ist ebenfalls bekannt, Monofilamente als Festigkeitsträger im Wulstverstärkereinzusetzen, wodurch an Material und somit an Materialkosten und an Gewicht des Reifens gegenüber Festigkeitsträgern mit mehrfachen Filamenten eingespart wird. Die Einsparung an Gewicht des Reifens wirkt sich positiv auf dessen Rollwiderstand aus. Jedoch sind die Monofilamente im Wulstverstärker wellenförmig oder spiralförmig ausgebildet, wodurch der Wulstverstärker eine gewisse Elastizität aufweist, welche sich nachteilig auf das Ansprechen des Reifens bei Seitenkraft auswirken kann.

Aus der EP0780248 A1 und aus der DE 10 2006 020 308 A1 sind Fahrzeugreifen bekannt, dessen Wulstbereiche je zwei Verstärkungslagen aufweisen, von denen eine axial innen und die andere axial außen in Bezug auf den Wulstkern mit Apex angeordnet ist. Die Festigkeitsträger dieser vorgenannten Verstärkungslagen sind keine Monofilamente.

Ein Wulstverstärker ist üblicherweise axial außen in Bezug auf den Wulstkernreiter angeordnet, wobei das obere Ende des Wulstverstärkers oberhalb oder unterhalb des oberen Ende des Wulstkernreiters enden kann und wobei das untere Ende des Wulstverstärkers auf Höhe des Wulstkernreiters oder auf Höhe des Wulstkernes endet. Der Wulstverstärker ist eine Kautschuklage, welche parallel zueinander und voneinander beanstandete Festigkeitsträger aufweist und welche ringkreisförmig im Bereich des Wulstes um den Reifen umläuft.

Man ist ständig bemüht, das Handling des Fahrzeugluftreifens zu verbessern, ohne seine übrigen Eigenschaften nachteilig zu beeinflussen.

Es ist daher die Aufgabe der Erfindung, einen Fahrzeugluftreifen zur Verfügung zu stellen, der ein verbessertes Handling aufweist, ohne den Rollwiderstand zu verschlechtern.

Die Aufgabe wird gelöst, indem die Monofilamente eine Konstruktion 1x0,15 mm aufweisen.
Der Wulstverstärker des erfindungsgemäßen Reifens dient der Versteifung des Wulstbereiches, was durch seine geraden, nicht wellenförmig oder spiralförmig verformten Monofilamente erreicht wird. Ferner bilden die Festigkeitsträger des Wulstverstärkers mit den Festigkeitsträgern der Karkasse einen Kreuzverband, wodurch die Schubverformungen in der Seitenwand reduziert werden. Durch beides wird ein Handlingvorteil ohne Nachteil im Rollwiderstand erreicht.

Zweckmäßig ist es, wenn die Monofilamente einen Winkel α von 24° bis 45°, vorzugsweise von 30° bis 45° mit der Umfangsrichtung einschließen, um einen ausreichenden Kreuzverband mit der Karkasse zu bilden.

Vorteilhaft ist es, wenn die Monofilamente im Wulstverstärker in einer Dichte von etwa 110 EPDM angeordnet sind, wodurch eine ausreichende Festigkeit in Verbindung mit den Monofilamenten erreicht wird.

Vorteilhaft ist es, wenn der Wulstverstärker einlagig ausgebildet ist, da hierdurch bereits ein ausreichender Kreuzverband gebildet wird. Weitere Lagen würden Gewicht, Kosten und Rollwiderstand erhöhen, aber nicht im gleichen Maße die Wirksamkeit bezüglich der Fahreigenschaften.
In einer Ausführungsform ist der Wulstverstärker zwischen Wulstkernreiter und Karkasshochschlag angeordnet. In einer alternativen Ausführungsform ist der Wulstverstärker axial außen in Bezug auf den Karkasshochschlag angeordnet. Die Wirksamkeit des Kreuzverbandes mit der Karkasse wird in beiden Ausführungsformen erreicht.
Bei dem nachfolgenden Ausführungsbeispiel handelt es sich um eine schematische Darstellung, die nicht unter den Gegenstand der Erfindung fällt. Die Darstellung erleichtert das Verständnis der Erfindung.

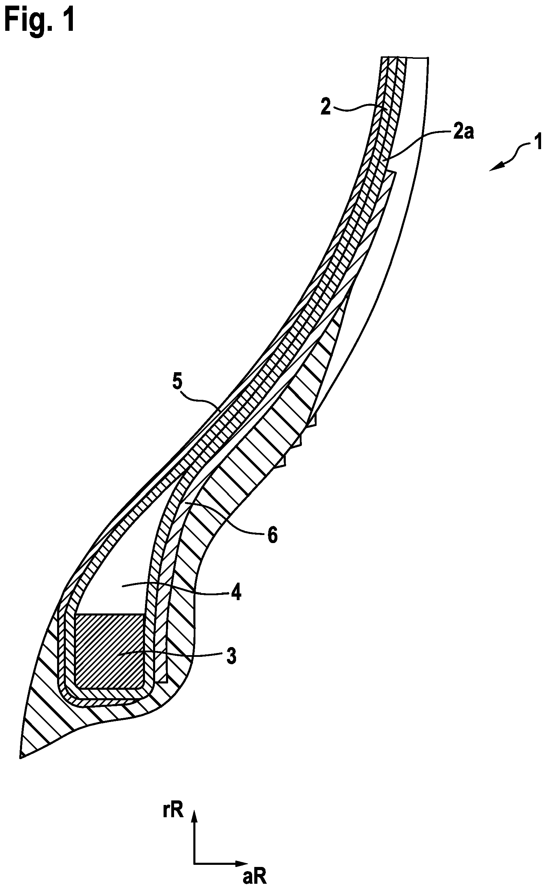

Die Fig. 1 zeigt einen Querschnitt durch den Wulstbereich 1 eines Fahrzeugluftreifens, hier eines PKW-Reifens radialer Bauart. Der PKW-Reifen weist eine übliche Standardkonstruktion auf, mit zwei Seitenwänden, einem Kronenbereich, mit einer Karkasse 2, welche die Wulstkerne 3 und die den Wulstkernen 3 aufsitzenden Wulstkernreiter 4 von axial innen nach axial außen umläuft und in einem Karkasshochschlag 2a endet, mit einer luftdicht ausgeführten Innenschicht 5, einem mehrlagigen Gürtel und einem Laufstreifen.
Der Wulstbereich 1 weist einen einlagig ausgeführten Wulstverstärker 6 auf. Der Wulstverstärker 6 ist axial außen in Bezug auf den Karkasshochschlag 2a angeordnet und befindet sich unmittelbar benachbart zu diesem. Der Wulstverstärker 6 weist Monofilamente als Festigkeitsträger auf. Die Monofilamente sind gerade und linienförmig ausgebildet und weisen die Konstruktion 1x0,30 mm auf. Die Monofilamente schließen einen Winkel α von 24° bis 45°, vorzugsweise von 30° bis 45° mit der Umfangsrichtung ein. Die Monofilamente sind in einer Dichte von 110 EPDM angeordnet im Wulstverstärker 6 angeordnet.

### Bezugszeichenliste

### (Teil der Beschreibung)

- 1: Wulstbereich
- 2: Karkasse
- 2a: Karkasshochschlag
- 3: Wulstkern
- 4: Wulstkernreiter
- 5: Innenschicht
- 6: Wulstverstärker

- rR: radiale Richtung
- aR: axiale Richtung

## Patentansprüche

1. Fahrzeugluftreifen mit einer Radialkarkasse (2) und zwei Wulstbereichen (1), welche je einen Wulstkern (3) und einen dem Wulstkern (3) aufsitzenden Wulstkernreiter (4) aufweisen, wobei die Karkasse (2) von axial innen nach axial außen um die Wulstkerne (3) geführt ist und in einem Karkasshochschlag (2a) endet und wobei Wulstverstärker (6) in den beiden Wulstbereichen (1) des Fahrzeugluftreifens angeordnet sind, welche axial außen in Bezug auf den Wulstkernreiter (4) plaziert sind und wobei der Wulstverstärker (6) Monofilamente als Festigkeitsträger aufweist,
**wobei** die Monofilamente gerade und linienförmig ausgebildet sind, **dadurch gekennzeichnet, dass** die Monofilamente eine Konstruktion 1x0,15 mm aufweisen.

2. Fahrzeugluftreifen nach Anspruch 1, **dadurch gekennzeichnet, dass** die Monofilamente einen Winkel α von 24° bis 45°, vorzugsweise von 30° bis 45° mit der Umfangsrichtung einschließen.

3. Fahrzeugluftreifen nach einem oder mehreren der vorangehenden Ansprüche, **dadurch gekennzeichnet, dass** die Monofilamente im Wulstverstärker (6) in einer Dichte von 110 EPDM angeordnet sind.

4. Fahrzeugluftreifen nach einem oder mehreren der vorangehenden Ansprüche, **dadurch gekennzeichnet, dass** der Wulstverstärker (6) einlagig ausgebildet ist.

5. Fahrzeugluftreifen nach einem oder mehreren der vorangehenden Ansprüche, **dadurch gekennzeichnet, dass** der Wulstverstärker zwischen Wulstkernreiter und Karkasshochschlag angeordnet ist.

6. Fahrzeugluftreifen nach einem oder mehreren der vorangehenden Ansprüche 1 bis 4, **dadurch gekennzeichnet, dass** der Wulstverstärker (6) axial außen in Bezug auf den Karkasshochschlag (2a) angeordnet ist.

## Claims

1. Pneumatic vehicle tyre with a radial carcass (2) and two bead regions (1), which each have a bead core (3) and a bead filler (4) located on the bead core (3), the carcass (2) being led from axially the inside axially outwards around the bead cores (3) and ending in a carcass turn-up (2a), and bead reinforcers (6) that are placed axially outside with respect to the bead filler (4) being arranged in the two bead regions (1) of the pneumatic vehicle tyre and the bead reinforcer (6) comprising monofilaments as reinforcing elements,
wherein the monofilaments are formed as straight and linear, **characterized in that** the monofilaments have a construction of 1×0.15 mm.

2. Pneumatic vehicle tyre according to Claim 1, **characterized in that** the monofilaments form an angle α of 24° to 45°, preferably of 30° to 45°, with the circumferential direction.

3. Pneumatic vehicle tyre according to one or more of the preceding claims, **characterized in that** the monofilaments in the bead reinforcer (6) are arranged in a density of 110 EPDM.

4. Pneumatic vehicle tyre according to one or more of the preceding claims, **characterized in that** the bead reinforcer (6) is formed as a single ply.

5. Pneumatic vehicle tyre according to one or more of the preceding claims, **characterized in that** the bead reinforcer is arranged between the bead filler and the carcass turn-up.

6. Pneumatic vehicle tyre according to one or more of the preceding Claims 1 to 4, **characterized in that** the bead reinforcer (6) is arranged axially outside with respect to the carcass turn-up (2a).

## Revendications

1. Bandage pneumatique pour roue de véhicule présentant une carcasse radiale (2) et deux zones de bourrelet (1) qui présentent chacune une âme de bourrelet (3) et un cavalier (4) d'âme de bourrelet qui repose sur l'âme de bourrelet (3),
la carcasse (2) étant passée axialement de l'intérieur vers l'extérieur autour de l'âme de bourrelet (3) et se terminant en un rabat supérieur (2a) de carcasse,
les renforts de bourrelet (6) étant disposés dans les deux zones de bourrelet (1) du bandage pneumatique pour roue de véhicule et étant placés axialement à l'extérieur par rapport au cavalier (4) d'âme de bourrelet, le renfort de bourrelet (6) présentant des monofilaments comme renforts,
les monofilaments tant rectilignes et linéaires, **caractérisé en ce que**
les monofilaments ont une structure 1x0,15 mm.

2. Bandage pneumatique pour roue de véhicule selon la revendication 1, **caractérisé en ce que** les monofilaments forment un angle α de 24° à 45° et de préférence de 30° à 45° avec la direction périphérique.

3. Bandage pneumatique pour roue de véhicule selon l'une ou plusieurs des revendications précédentes, **caractérisé en ce que** les monofilaments du renfort de bourrelet (6) sont disposés à une densité de 110 EPDM.

4. Bandage pneumatique pour roue de véhicule selon l'une ou plusieurs des revendications précédentes, **caractérisé en ce que** le renfort de bourrelet (6) est réalisé en une seule couche.

5. Bandage pneumatique pour roue de véhicule selon l'une ou plusieurs des revendications précédentes, **caractérisé en ce que** le renfort de bourrelet est disposé entre le cavalier d'âme de bourrelet et le rabat supérieur de carcasse.

6. Bandage pneumatique pour roue de véhicule selon l'une ou plusieurs des revendications 1 à 4 qui précèdent, **caractérisé en ce que** le renfort de bourrelet (6) est disposé axialement à l'extérieur du rabat supérieur (2a) de carcasse.
